# EUROPEAN PATENT APPLICATION

(11) **EP 4 436 105 A1**
(43) Date of publication of application: **25.09.2024**
(21) Application number: 23163176.3
(22) Date of filing: 21.03.2023
(51) Int. Cl.: H04L 9/40, H04W 12/102, G06F 21/44

(54) **COMPUTER-IMPLEMENTED METHOD, COMPUTER PROGRAM PRODUCT AND COMMUNICATION SYSTEM FOR DATA TRANSMISSION**

(71) Applicant: Siemens Aktiengesellschaft, 80333 München (DE)
(72) Inventor: Aschauer, Hans, 81829 München (DE); Frank, Reinhard, 81369 München (DE); Herrmann, Jan, 80999 München (DE); Huth, Hans-Peter, 80638 München (DE); Limmer, Tobias, 85276 Pfaffenhofen a.d. Ilm (DE)
(74) Representative: Siemens Patent Attorneys

(57) **Abstract**

A computer-implemented method for data transmission in a communication system is proposed. The method comprising:
a) establishing a channel, including an input and an output, between a first unit and a second unit of the communication system, wherein an input IP is assigned to the input and an output IP is assigned to the output,
b) receiving, a first IP-packet including first IP-addresses and a payload,
c) matching, the first IP-addresses to first database IP-addresses for obtaining a channel-ID,
d) generating, a second IP-packet including second IP-addresses, the channel-ID and the payload,
e) matching, the channel-ID to a corresponding decryption key and decrypting the payload,
f) matching, the second IP-addresses to second database IP-addresses for obtaining a physical destination IP-address, and
g) generating, a third IP-packet and transmitting the third IP-packet to a physical destination IP-address.

## Description

The present invention relates to a computer-implemented method, a computer program product and a communication system for data transmission between a first channel service unit and a second channel service unit.

When accessing application services via a communications network, it is usually necessary to decide at one point which device may access to which service under which circumstances. To do this, a device must normally authenticate itself ("who am I") and based on this a decision is made as to which authorizations are granted ("what am I allowed to do").

Traditionally, each service has been configured in such a way that, based on login information, the appropriate permissions are granted by the application service.

In order to simplify administration, current architectures are moving towards outsourcing authentication to a separate service (Identity and Access Management (IAM)). In this service, it is centrally configured which services which device may use under which circumstances (authorization information).

In the context of zero trust architectures, for example, NIST Special Publication 800-207, the decision as to whether a particular access is permitted or not is made not only on the basis of administrative and statically specified criteria (e.g., user X is permitted to assume role Z in application Y), but also on the basis of dynamic information (e.g., the client system has been identified as compromised by a network monitoring component).

Furthermore, so-called "remote access" solutions, such as zScaler or so-called virtual private networks (VPN), are often used today for communication between end devices located in private address spaces.

It is one object of the present invention to improve the data transmission between two units.

Accordingly, a computer-implemented method for data transmission between a first channel service unit and a second channel service unit both included in a communication system which includes a channel database is proposed. The method comprising:
a) establishing a secure communication channel, including an input and an output, between the first channel service unit and the second channel service unit in dependence on a successful verification of a token, wherein an input channel IP-address is assigned to the input and an output channel IP-address is assigned to the output,
b) receiving, by the first channel service unit, a first IP-packet transmitted to the input channel IP-address, wherein the input channel IP-address is assigned to the first channel service unit, wherein the first IP-packet includes a first header with first header IP-addresses and a first payload,
c) matching, by the first channel service unit, the first header IP-addresses to first database IP-addresses included in the channel database for obtaining a channel-ID associated to the second channel service unit,
d) generating, by the first channel service unit, a second IP-packet addressed to the second channel service unit and including a second header with second header IP-addresses, the channel-ID and an encrypted first payload, and transmitting the second IP-packet via an intermediate network to the second channel service unit,
e) matching, by the second channel service unit, the channel-ID to a corresponding decryption key and decrypting and verifying the encrypted first payload by means of the decryption key, and if the verifying is positive,
f) matching, by the second channel service unit, the second header IP-addresses to second database IP-addresses assigned to the channel-ID included in the channel database for obtaining a physical destination IP-address, and
g) generating, by the second channel service unit, a third IP-packet including the physical destination IP-address and the first payload, and transmitting the third IP-packet to the physical destination IP-address.

Using the present computer-implemented method according to the first aspect, the data transmission between a first communication unit via the first channel service unit and a second communication unit via the second channel service unit is improved since on the one hand, the data transmission between the first communication unit, for example, a first legacy device, and the second communication unit, for example, a second legacy device, directly or via the respective channel service units is only possible via a Zero Trust channel (the secure communication channel). On the other hand, a communication unit, for example, the first communication unit, which is not authorized by the identity and access management unit (IAM) to communicate with another communication unit, for example, the second communication unit, is not able to establish a connection to the second communication unit since the first communication unit does "not see" the second communication unit. In particular, the term "not see" means that the first communication unit cannot address IP-packets which are transmitted to or addressed to an invalid input channel IP-address of a secure communication channel. Only if the first communication unit has a valid input channel IP-address which is linked to the second communication unit via the output channel IP-address, the first communication unit can address messages to the second communication unit and can then transmit messages in form of IP-packets by means of the input channel IP-address and the output channel IP-address via the secure communication channel to the second communication unit. Preferably, the IAM determines whether a communication unit is allowed to establish a secure communication channel to another communication unit via the respective channel service units. Thus, the IAM determines whether a communication unit "sees" or can reach another communication unit via a secure communication channel.

This has the technical effect that the first communication unit, for example, a client and/or the first legacy device, and the second communication unit, for example, a service and/or the second legacy device, can communicate via Zero Trust Channels (the secure communication channel), although the corresponding soft- and hardware, on which the respective first and second legacy devices run has no "knowledge" of Zero Trust Channels, but rather only uses the Internet protocol on OSI model layer 3 and, optionally, transport protocols such as a Transmission Control Protocol (TCP) or a User Datagram Protocol (UDP) that build on it.

Since a legacy device such as the first communication unit is technically unable to communicate with the IAM, the first channel service unit takes over the communication with the IAM for the first communication unit and the second channel service unit takes over the communication with the IAM for the second communication unit.

Then, after a secure communication channel has been established between the first and second channel service units in dependence on the IAM according to step a), a message in the form of a first IP-packet addressed to the input channel IP-address of the secure communication channel is transmitted from the first communication unit via the first channel service unit via the intermediate network to the second communication unit via the second channel service unit and via the output channel IP-address of the secure communication channel.

In the course of this transmission, a network translation of the IP-addresses of the first communication unit and the first channel service unit and of the second communication unit and the second channel service unit is performed according to the computer-implemented method according to the first aspect and its embodiments. After the network translation of these IP-addresses is finished, the message transmitted as a first IP-packet from the first communication unit reaches the second communication unit as a third IP-packet via the secure communication channel.

This has the advantage that a communication between the first and second legacy devices using legacy communication protocols can be secured via the secure communication channel. Thus, a further advantage is, as mentioned above, that unauthorized communication is impossible - a client such as the first communication unit does not see services such as the second communication to which it is not allowed to establish a communication relationship. This is an advantage over VPN solutions where communication links are established between networks.

A further advantage occurs at the communication of communication units, for example the first and second communication units, when they are located in networks with private IP-addresses according to Requests for Comments (RFC) 1918 or RFC 676.

In these networks with private IP-addresses according to RFC 1918 or RFC 676, there is an issue with such communication scenarios that, on the one hand, IP-packets whose destination address is in one of these address spaces are discarded in public internet networks, and, on the other hand, that the address spaces on both sides of the communication can overlap, as IP-addresses in private IP-address spaces are only locally unique. In particular, e.g., the IP-address of a client and a server from different sub-networks can match, and thus there can be many devices with the same IP-address. This often occurs in industrial automation systems, in particular when several machines of the same type are installed multiple times, since the IP-address of a specific installed component (e.g., a Programmable Logic Controller (PLC)) is often identical in all machines of this type.

In this context, the computer-implemented method according to the first aspect has the advantage that only explicitly allowed (authenticated and authorized) communication between a first communication unit and a second communication unit is allowed. A first communication unit can only communicate with a second or a third communication unit if the first communication unit has the respective valid input channel IP-address which is linked to the corresponding output channel IP-address assigned to the second or third communication unit. In particular, the first communication unit has access to the valid input channel IP-address only if it has been previously determined by means of the IAM during the channel setup according to step a) of the computer-implemented method that the first communication unit is allowed to communicate with the second or the third communication unit via the respective secure communication channel.

A further advantage of the computer-implemented method according to the first aspect is that regardless of the security state of a device, for example, the second communication unit, accessibility can be controlled in that manner that the IAM can determine which communication unit is allowed to establish a connection to the second communication unit.

In addition, a further advantage is that unlike the remote access solution zScaler, communication between channel service units is direct, without the need to send each data packet through a central zScaler instance (in the cloud or on-prem) .

A further advantage of the computer-implemented method according to the first aspect is that it is possible that the second communication unit can obtain the authorization information of the first communication unit, for example, the "role or user" of the first communication unit, included in the token via the secure communication channel. Then, the second communication unit can communicate this authorization information of the first communication unit over multiple communication protocols via multiple layers of the Open Systems Interconnection model (OSI model) up to the application level of the OSI model. In other words, the authorization information of the first communication unit bound at the token at the layer 3 of the OSI model can also be received in higher layers of the OSI model since the second communication unit can pass on the authorization information of the first communication unit in higher layers of the OSI model. Thus, for example, the second legacy device can pass on the authorization information of the first communication unit to higher layers of the OSI model although the second legacy device has no information about the secure communication channel.

A further advantage is that compared to VPN, the computer-implemented method according to the first aspect allows the targeted access to a specific service, for example, the second communication unit, without requiring a connection through a network-level tunnel. This reduces the possibility for malware to spread through lateral movement by reducing the attack surface.

A computer-implemented method is a method which involves the use of a computer, a computer network or other programmable apparatus, where one or more features are realized wholly or partly by means of a computer program.

Preferably, a channel database is a storage unit. The storage unit is configured to store the content of a first table and a second table. Specifically, in the first and the second tables, at least the channel-ID, the first legacy-IP-address, the second legacy-IP-address, the first database channel IP-address, the second database channel IP-address and cryptographic entities are stored.

The establishing according to step a) can be performed in dependence on the successful verification of the token for a predefined service of a communication unit, for example, the second or a third communication unit of the communication system.

In particular, a secure communication channel is a logical communication channel between the first channel service unit and the second channel service unit. Preferably, the secure communication channel is cryptographically secured by the token. Specifically, the secure communication channel is implemented in the layer 3 of the OSI model.

The input channel IP-address and the output channel IP-address are respectively unique within each respective channel service unit. In particular, therefore, in each channel service unit, for example, the first channel service unit, there is a one-to-one relationship between the secure communication channels managed by the first channel service unit and the associated input and output channel IP-addresses of the respective secure communication channel. Thus, for example, the channel IP-addresses managed by the first channel service unit, are all within the same (logical) network.

Preferably, an IP-packet ("Internet Protocol Datagram"), for example, the first or second IP-packet, is the basic element of Internet data communication. In particular, it includes a header, for example, a first header, which contains information about a source, destination, status, fragmentation, etc., and the payload, for example, the first payload. In particular, the term "IP-address" or "IP-addresses" is based on the internet protocol IPv6-standard. But, this term shall include every internet protocol or standard which builds on the internet protocol IPv6-standard and every following-up of this internet protocol IPv6-standard.

For example, an encrypted first payload is a payload which is encrypted by means of cryptographic entities. Cryptographic entities can include asymmetrical encryption/decryption including a public and private key pair and/or symmetrical encryption/decryption.

Preferably, a decryption key is a public key of a public and private key pair for decrypting the encrypted first payload. Further, the term "verifying" can include the examining of the decrypted first payload in dependence on the decryption key and an integrity check value included in the encrypted first payload. If the verifying is negative, this indicates that the decrypted first payload is possibly compromitted.

The intermediate network can be formed as the internet and/or a cloud.

In particular, the first channel service unit and the second channel service unit act as a control layer to permit or to interrupt data transmission from the first communication unit to the second communication unit.

Preferably, the steps b) to h) of the computer-implemented method are performed in layer 3 of the OSI model.

In particular, step e) further includes, prior to the matching, a step of receiving the second IP-packet.

Specifically, the physical destination IP-address is the actual or real IP-address of the second communication unit in a second network.

According to an embodiment, the first header IP-addresses include a physical source IP-address and a virtual destination IP-address, wherein the input channel IP-address corresponds to the virtual destination IP-address.

Preferably, the physical source IP-address is the actual or real IP-address of the first communication unit in a first network.

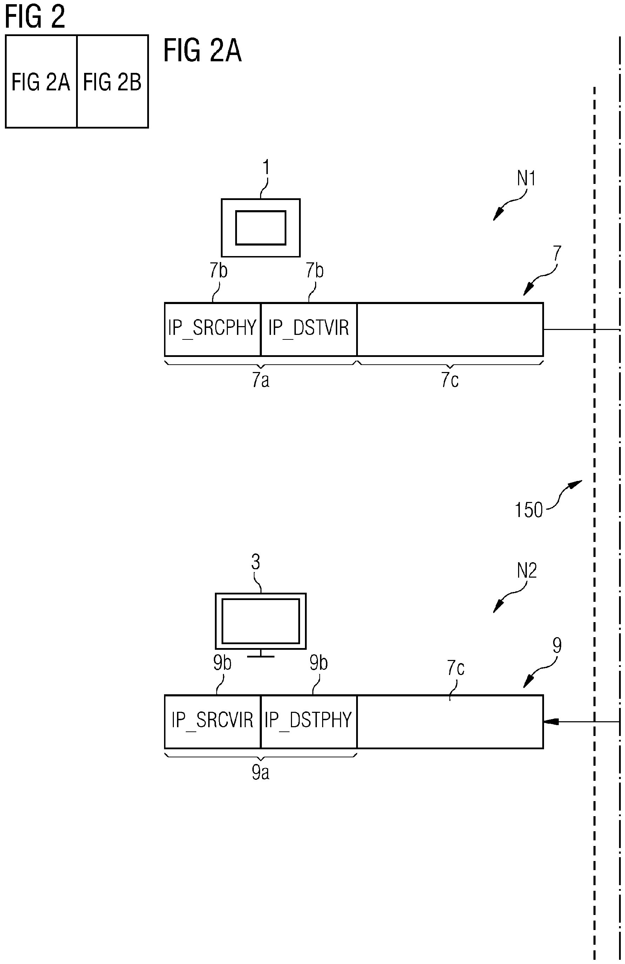

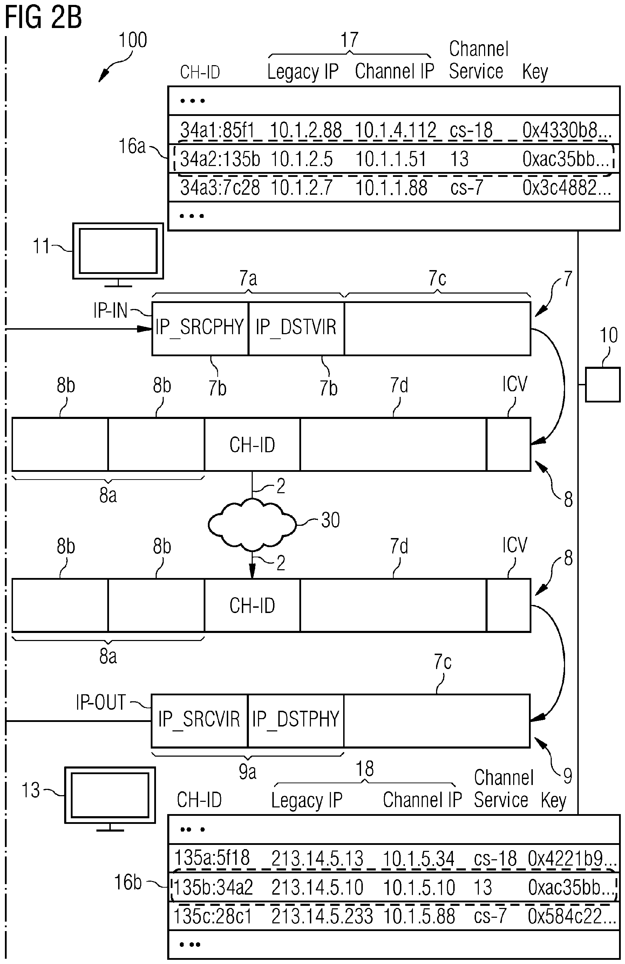

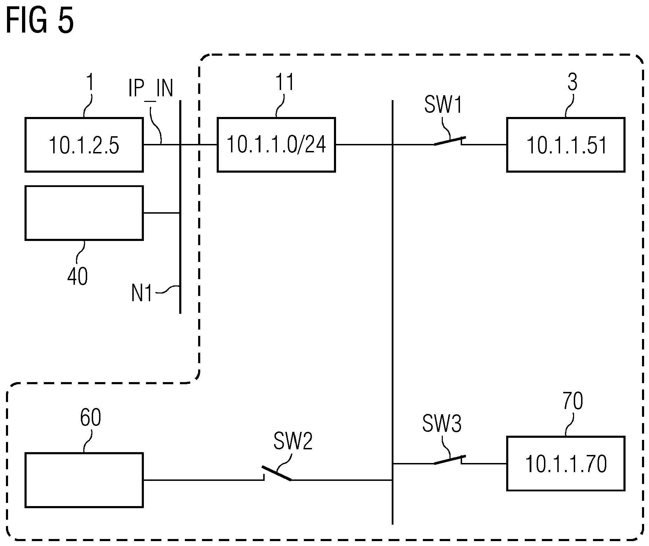

In particular, the virtual destination IP-address is the IP-address from the first communication unit's point of view for the input of the secure communication channel. Preferably, the virtual source IP-address is the IP-address from the second communication unit's point of view for the output of the secure communication channel. In particular, from the first communication unit's point of view, the first IP-packet which should be transmitted to the second communication unit, has no longer the physical destination IP-address of the second communication unit (213.14.5.10, see Fig. 2 below, reference sign 18), but the (ingoing) input channel IP-address (10.1.1.51, see Fig. 5 below, reference sign 3) of the secure communication channel.

According to a further embodiment, step c) further includes:
matching the physical source IP-address to a first legacy-IP-address included in the first database IP-addresses and matching the virtual destination IP-address to a first database channel IP-address included in the first database IP-addresses for obtaining the channel-ID, and
encrypting the first payload by means of cryptographic entities from the channel database for obtaining the encrypted first payload.

According to a further embodiment, the second header IP-addresses include the physical destination IP-address and a virtual source IP-address, wherein the output channel IP-address corresponds to the virtual source IP-address.

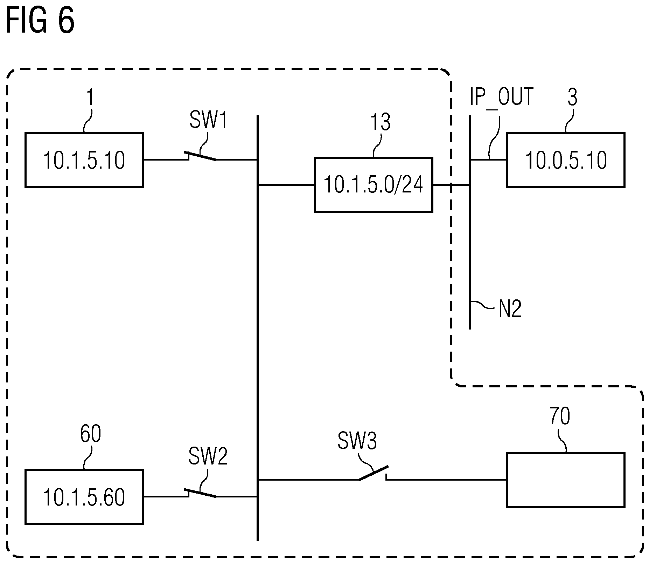

In particular, from the second communication unit's point of view, the third IP-packet which arrives at the second communication unit, has no longer the physical source IP-address of the client (10.1.2.5, see Fig. 5, reference sign 1), but the (outgoing) output channel IP-address (10.1.5.10, see Fig. 6, reference sign 3) of the secure communication channel.

According to a further embodiment, step f) further includes:
matching a second legacy-IP-address assigned to the channel-ID included in the second database IP-addresses to the physical destination IP-address and matching a second database channel IP-address assigned to the channel-ID included in the second database IP-addresses to the virtual source IP-address.

Preferably, a legacy-IP-address, for example, the first legacy-IP-address or the second legacy-IP-address, is the IP-address of the respective legacy device in its respective network. For example, the first legacy-IP-address is the IP-address of the first communication unit in the first network. Preferably, the second legacy-IP-address is the IP-address of the second communication unit in the second network.

In particular, a database channel IP-address, for example, the first database channel IP-address or the second database channel IP-address is the IP-address which is the virtual IP-address uniquely assigned to a respective channel end of the secure communication channel. For example, the first database channel IP-address corresponds to the virtual destination IP-address and the second database channel IP-address corresponds to the virtual source IP-address.

Cryptographic entities or further cryptographic entities can be formed as a cryptographic key material which is advantageously negotiated within step a) of the computer-implemented method according to the first aspect using a key agreement protocol between the first channel service unit and the second channel service unit. Preferably, cryptographic key material includes public and/or private keys pairs or symmetrical keys.

According to a further embodiment, the communication system further includes a first communication unit, wherein step b) includes, prior to the receiving, the step:
transmitting, by the first communication unit, the first IP-packet to the input channel IP-address.

In particular, the first communication unit is a client such as a laptop or a fileserver.

According to a further embodiment, the communication system further includes a second communication unit, wherein step g) further includes the step:
receiving, by the second communication unit, the third IP-packet from the output channel IP-address.

In particular, the second communication unit is a cloud service which is public accessible.

According to a further embodiment, the method further includes:
h) requesting a transmitting of the token by the second channel service unit for transmitting the token from the second channel service unit to the second communication unit, and if the request is granted,
transmitting the token from the second channel service unit to the second communication unit, wherein the token includes authorization information of the first communication unit.

This embodiment has the advantage, as described above, that it is possible that the second communication unit can obtain the authorization information of the first communication unit, for example, the "role or user" of the first communication unit, included in the token via the secure communication channel. Then, the second communication unit can communicate this authorization information of the first communication unit over multiple communication protocols via multiple layers of the OSI model up to the application level of the OSI model.

The authorization information can include a role and/or an authorization of the first communication unit, in particular for accessing the predefined service of the second communication unit.

Preferably, the requesting according to step h) further includes requesting a transmitting of the token by the second communication unit in dependence on an application programming interface using the output channel IP-address of the secure communication channel.

In particular, the second communication unit collects the token or the authorization information assigned to the secure communication channel from the second channel service unit and evaluates the authorization information application (for example, the predefined service) specific.

Further, the second communication unit may recognize by which secure communication channel or further secure communication channel the second communication unit is addressed. Preferably, since the second communication unit has in the third IP-packet the virtual source IP-address which corresponds to the output of the secure communication channel, the second communication unit has information about via which channel it is addressed, namely the secure communication channel.

According to a further embodiment, the communication system includes a first network and a second network, wherein the first communication unit and the first channel service unit are arranged within the first network and the second communication unit and the second channel service unit are arranged within the second network.

Preferably, the first network is a private network, wherein the second network is a public network. For example, the second network can also be private network. Also, the first network can be a public network and the second network at the same time can be a public network.

For example, a private IP-address or a public IP-address is assigned to a respective communication unit by a respective channel service unit. Preferably, the first communication unit has the physical source IP-address 10.1.2.5 which is the private IP-address of the first communication unit since the first communication unit is in the first network which is in this case a private network. In particular, the second communication unit has the physical destination IP-address 213.14.5.10 which is the public IP-address of the second communication unit since the second communication unit is in the second network which is in this case a public network.

According to a further embodiment, the first channel service unit is formed as a first proxy and the second channel service unit is formed as a second proxy.

Preferably, a proxy such as the first proxy or the second proxy is a device, in particular a server device, and/or software code which can act as an intermediary unit between the first communication unit requesting a resource (that is the predefined service of the second communication unit) and the second communication unit providing that resource.

According to a further embodiment, the first communication unit is formed as a first legacy device and the second communication unit is formed as a second legacy device.

Preferably, a legacy device such as the first legacy device or the second legacy device, refers to a computing device or equipment that is outdated, obsolete or no longer in production. This includes all devices that are unsupported or no longer commonly used by most devices and software applications.

Specifically, the legacy device such as the first legacy device or the second legacy device cannot communicate with the IAM. The task of communicating with the IAM is taken over by the first channel service unit for the first communication unit and the second channel service unit for the second communication unit. In particular, the first communication unit has no knowledge about that whether the first channel service unit communicates with the IAM and the second communication unit has no knowledge about that whether the second channel service unit communicates with the IAM.

According to a further embodiment, the first communication unit and the first channel service unit are implemented within a first network device and/or the second communication unit and the second channel service unit are implemented within a second network device.

In particular, a network device such as the first network device or the second network device is a device and/or a software code required for communication and interaction between hardware systems in a computer network or multiple networks, for example, the first network and the second network. A network device can also be a stand-alone instance (system service) implemented in parallel to the applications of the first communication unit and/or the second communication unit. Further it is possible that the network device can be implemented as a functional library in the software code of the first communication unit and/or the second communication unit by "linking" of a respective library.

Specifically, this embodiment can be implemented only if the first and second communication units are no legacy devices, respectively.

According to a further embodiment, step a) further includes:
establishing a further secure communication channel, including a further input and a further output, between the first channel service unit and the second channel service unit in dependence on the successful verification of a further token, wherein a further input channel IP-address is assigned to the further input and a further output channel IP-address is assigned to the further output,
wherein the step b) further includes:
   receiving a further first IP-packet transmitted to the further input channel IP-address, wherein the further input channel IP-address is assigned to the first channel service unit, wherein the further first IP-packet includes a further first header with further first header IP-addresses and a further first payload,
   wherein the step c) further includes:
      matching the further first header IP-addresses to further first database IP-addresses included in the channel database for obtaining a further channel-ID associated to the second channel service unit,
      wherein the step d) further includes:
         generating a further second IP-packet addressed to the second channel service unit and including a further second header with further second header IP-addresses, the further channel-ID and a further encrypted first payload, and transmitting the further second IP-packet via the intermediate network to the second channel service unit,
         wherein the step e) further includes:
            matching the further channel-ID to a further corresponding decryption key and decrypting and verifying the further encrypted first payload by means of the further decryption key, and if the verifying is positive, step f) further includes:
            matching the further second header IP-addresses to further second database IP-addresses assigned to the further channel-ID included in the channel database for obtaining a further physical destination IP-address, and
            wherein the step g) further includes:
               generating a further third IP-packet including the further physical destination IP-address and the further first payload, and transmitting the further third IP-packet to the further physical destination IP-address.

In particular, the channel service units also offer the possibility that there are multiple channels between the same first communication unit and the same second communication unit.

This has the advantage that the first communication unit or any other respective communication unit has different roles and permissions in dependence on the respective channel.

This can be useful in a scenario where the secure communication channel or the token attached to the secure communication channel not only includes authorization information for connectivity, but also additional authorization information that is evaluated by the application (for example, the predefined service) of the second communication unit, such as a group membership of the first communication unit (e.g., if the first communication unit is an "admin" or a "user").

In this case, it is possible and useful that the first communication unit establishes multiple channels, the secure communication channel and the further secure communication channel to the same service such as the second communication unit. In the context of each channel, the first communication unit would then have different permissions with respect to the application of the second communication unit.

For example, when establishing the secure communication channel, the first communication unit has the role "admin", wherein when establishing the further secure communication channel, the first communication unit has the role "user". In the role "user", the first communication unit has less permissions than in the role "admin".

Preferably, also in this case, the first communication unit reaches the second communication unit via two different input channel IP-addresses, namely the input channel IP-address of the secure communication channel and the further input channel IP-address of the further secure communication channel. In particular, from the first communication unit's point of view, the first communication communicates with two "different" second communication units although it is still the same second communication unit. At each "different" second communication unit, the first communication unit has different permissions according to its respective role.

In particular, the second communication unit provides or includes multiple applications and/or services, for example, a first service, a second service, a third service and a fourth service.

Preferably, in dependence on the channel used, for example, the secure communication channel, the virtual source IP-address which is assigned to the respective output of the channel changes. From the second communication unit's point of view, the virtual source IP-address of the first communication unit or by which it can conclude to the first communication unit, changes in dependence on the used channel. For example, the first communication unit connects to or gets access to the third service and the fourth service of the second communication unit through different channels, namely the secure communication channel and the further secure communication channel.

For example, if the first communication unit communicates through the secure communication channel, it has the virtual source IP-address 10.1.5.10 from the second communication unit's point of view. If the first communication unit communicates through the further secure communication channel, it has the virtual source IP-address 10.1.5.20 from the second communication unit's point of view.

In particular, the further secure communication channel can be formed in the same ways as the secure communication channel is formed. Preferably, embodiments and features described with reference to the secure communication channel apply mutatis mutandis to the further secure communication channel. Explanations of features with respect to the first aspect, for example, an input or an input channel IP-address, apply equally to the features with respect to this embodiment, for example, a further input or a further input channel IP-address.

According to a further embodiment, the communication system further includes an identity and access management unit, wherein step a) includes, prior to the establishing, the steps:
transmitting second authentication material associated to the second channel service unit to the identity and access management unit,
transmitting a request for authenticating the first channel service unit in dependence on first authentication material and a request for obtaining the token for establishing the secure communication channel between the first and second channel service units to the identity and access management unit,
transmitting, after successful authentication of the first and second channel service units in dependence on the first and second authentication material, the token to the first and second channel service units, and
verifying the token by the second channel service unit.

In particular, this embodiment includes preparing steps (transmitting, transmitting, transmitting and verifying) prior to the establishing of the secure communication channel according to step a) of the computer-implemented method according to the first aspect.

Preferably, the preparing steps of this embodiment are executed at a time point when the boot service of the first and second channel service units is started. These preparing steps can also be referred to steps for setup the secure communication channel or short "channel setup". When the establishing according to step a) is finished, the communication between the first and second channel service units or between the first and second communication units over the secure communication channel can be started.

Specifically, the IAM is a unit, with which it is possible to assign all user profiles and accesses to a specific identity, for example, the first communication unit or the second communication unit.

Preferably, authentication material such as the first authentication material or second authentication material includes a respective certificate of the first channel service unit and/or the second channel service unit for providing proof of their respective actual identity. In particular, the respective certificate is a digital certificate and the process of "authenticating" includes an exchange of the digital certificates and/or cryptographic key material between the IAM and the first channel service unit and/or the second channel service unit.

In particular, the term "verifying the token" by the second channel service unit includes an examination based on the token associated with the first channel service unit whether the first channel service unit may have access to the second channel service unit. In particular, the first channel service unit can have access to the second channel service unit if the identity of the first channel service unit is successfully proved.

Specifically, step a) further includes, prior to the establishing, the step: storing channel service-specific information of the first channel service unit and the second channel service unit in the channel database of the communication system.

As part of the channel setup according to step a), each participating channel service, for example, the first channel service unit and the second channel service unit, advantageously stores channel service-specific information in the channel database. Channel service-specific information can include the channel-ID, the first and second legacy-IP-addresses, an input channel IP-address, an output channel IP-address and cryptographic key material.

According to a further embodiment, step a) includes, prior to the establishing, the steps:
transmitting, by the second channel service unit, the second authentication material associated to the second channel service unit to the identity and access management unit, wherein the second authentication material includes a predefined service of the second communication unit and a request for authenticating the second channel service unit at the identity and access management unit,
transmitting, by the first channel service unit, a request for authenticating the first channel service unit at the identity and access management unit to the identity and access management unit in dependence on first authentication material and transmitting, a request for obtaining the token for establishing the secure communication channel between the first and second channel service units for obtaining access to the predefined service to the identity and access management unit, wherein the token includes authorization information for the predefined service,
transmitting, after a successful authentication of the first channel service unit and after a successful authorization of the first channel service unit for the predefined service in dependence on at least the first authentication material, the token to the first channel service unit,
transmitting, by the first channel service unit, the token to the second channel service unit.

According to a further embodiment, step a) further includes, prior to the establishing, the step:
determining access information for the first communication unit, wherein the access information indicates which specific services of a set of predefined services the first communication unit is allowed to have access to.

In particular, the access information indicates, by means of multiple switches, which specific services of the set of predefined services provided by or included in the second communication unit the first communication unit is allowed to have access to.

In addition, the communication system can include a further first communication unit, a further second communication unit, a third communication unit and a fourth communication unit.

For example, the multiple switches are arranged in communication paths between the respective communication units, e.g., in a communication path between the first communication unit and the second communication unit or the further second communication unit and/or between the first communication unit and the fourth communication unit and/or between the third communication unit and the second communication unit or the further second communication unit.

Thus, preferably, the IAM determines which of the multiple switches are closed and open. This means the IAM can provide information, in dependence on the multiple switches and the access information, indicating which of the communication units, for example, the first communication unit (client), are allowed to communicate with which of the second or fourth communication units (services).

Hence, the closed or open switches represent communication connections that have been allowed or not allowed by the IAM.

Preferably, the IAM executes the step of determining according to this embodiment in step a) of the computer-implemented method according to the first aspect.

For example, the set of predefined services includes the first service, the second service, the third service and the fourth service. Each of this respective services can be provided by the second communication unit. In particular, the first channel service unit can request for a predefined service of the set a token at the IAM. Preferably, the first channel service unit requests the token in the name of the first communication unit.

In particular, during the channel setup according to step a), the first channel service unit implements the communication with the IAM (incl. authentication) and the key agreement with the second channel service unit, so that, as a result, the secure (authenticated, explicitly authorized, encrypted and integrity-protected) communication channel is established between the first and second channel service units.

According to a further embodiment, step d) further includes:
encoding the channel-ID into the first header IP-addresses for obtaining an encoded channel-ID,
generating, by the first channel service unit, a fourth IP-packet including the encoded channel-ID and the first payload,
encrypting the fourth IP-packet by means of further cryptographic entities for obtaining an encrypted fourth IP-packet, and
generating, by the first channel service unit, a fifth IP-packet including as a header the second header IP-addresses and a specific payload including the obtained encrypted fourth IP-packet, and transmitting the fifth IP-packet via the intermediate network to the second channel service unit.

The term "encoding" particularly includes, that the channel-ID is coded into the first header IP-addresses.

In particular, the channel-ID advantageously includes two components, namely a first ID-component and a second ID-component. The first ID-component can be provided by the first communication unit and the second ID-component can be provided by the second communication unit. Thus, it is ensured that the first ID-component is unique on the client side, for example, the side of the first communication unit, and the second ID-component is unique on the service side, for example, the side of the second communication unit. This ensures that the entire channel-ID is unique for both client-side (first) and service-side (second) channel service units. For example, the channel-ID is 34a2:135b. Preferably, in this example, the first ID-component is 34a2 and the second ID-component is 135b.

According to a further embodiment, step d) further includes: encoding the first ID-component into the physical source IP-address of the first communication unit and encoding the second ID-component into the virtual destination IP-address for obtaining the encoded channel-ID.

In particular, the encoded channel-ID has a source IP-address 10.200.19.91 and a destination IP-address 10.200.52.162. For example, the encoded number "19" in the source IP-address 10.200.19.91 corresponds to the original number "13" of the second ID-component "13"5b (135b), wherein the encoded number "91" in the source IP-address 10.200.19.91 corresponds to the original term "5b" of the second ID-component 13"5b" (135b). Preferably, in an analogous way, the encoded number "52" in the destination IP-address corresponds to the original number "34" of the first ID-component "34"a2 (34a2), wherein the encoded number "162" in the destination IP-address 10.200.52.162 corresponds to the original term "a2" of the first ID-component 34"a2" (34a2).

This embodiment is an implementation by means of an existing IP-VPN protocol, provided it tunnels entire IP-packets. Examples of this are IPSec in tunnel mode or Wireguard-VPN.

As described above, in this case, the both components of the channel-ID, the first ID-component and the second ID-component, are encoded into the first header IP-addresses to obtain the encoded channel-ID which is then included by means of a fourth IP-packet into a fifth IP-packet. In particular, this fifth IP-packet is then transferred to the IP-VPN tunnel which executes the encryption of the fifth IP-packet and the transmission to the next unit, for example, the second channel service unit.

Preferably, the steps "encoding the channel-ID" and "generating a fourth IP-packet" of this embodiment, when they are implemented on a Linux system, after a one-time configuration of the kernel components "iptables" or "nftables", are performed without intervention of userspace processes. This has the advantage that this results in both high throughput and low latency time.

For example, "iptables" is a user-space utility program that allows a system administrator to configure the IP-packet filter rules of the Linux kernel firewall, implemented as different Netfilter modules. Further, "nftables" is a subsystem of the Linux kernel providing filtering and classification of network packets/datagrams/frames.

Any embodiment of the first aspect may be combined with any embodiment of the first aspect to obtain another embodiment of the first aspect.

According to a second aspect, a computer program product is proposed which comprises a program code for executing the computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a communication system for data transmission between a first channel service unit and a second channel service unit included in the communication system is proposed. The communication system comprising:
a channel database,
an identity and access management unit,
a first communication unit and a second communication unit, wherein the second channel service unit is configured to, prior to the establishing:
   transmit second authentication material associated to the second channel service unit to the identity and access management unit, wherein the first channel service unit is configured to:
   transmit a request for authenticating the first channel service unit in dependence on first authentication material and transmit a request for obtaining a token for establishing a secure communication channel between the first and second channel service units to the identity and access management unit, wherein the identity and access management unit is configured to:
   transmit, after successful authentication of the first and second channel service units in dependence on the first and second authentication material, the token to the first and second channel service units, wherein the second channel service unit is configured to:
   verify the token and to establish the secure communication channel, including an input and an output, between the first channel service unit and the second channel service unit in dependence on a successful verification of the token, wherein an input channel IP-address is assigned to the input and an output channel IP-address is assigned to the output, wherein the first channel service unit is configured to:
   receive, from the first communication unit, a first IP-packet, transmitted to the input channel IP-address, wherein the input channel IP-address is assigned to the first channel service unit, wherein the first IP-packet includes a first header with first header IP-addresses and a first payload,
   match the first header IP-addresses to first database IP-addresses included in the channel database for obtaining a channel-ID associated to the second channel service unit,
   generate a second IP-packet addressed to the second channel service unit and including a second header with second header IP-addresses, the channel-ID and an encrypted first payload, and to transmit the second IP-packet via an intermediate network to the second channel service unit, wherein the second channel service unit is configured to:
      match the channel-ID to a corresponding decryption key and decrypting and verifying the encrypted first payload by means of the decryption key, and if the verifying is positive,
      match the second header IP-addresses to second database IP-addresses assigned to the channel-ID included in the channel database for obtaining a physical destination IP-address, and
      generate a third IP-packet including the physical destination IP-address and the first payload, and to transmit the third IP-packet to the physical destination IP-address.

The technical effects and advantages described for the computer-implemented method according to the first aspect apply equally to the communication system according to the third aspect and to embodiments of the communication system according to the third aspect. Further, embodiments and features described with reference to the computer-implemented method according to the first aspect apply mutatis mutandis to the communication system according to the third aspect and embodiments of the communication system according to the third aspect.

Preferably, the communication system can be implemented as a technical system, such as an automatization and/or control system. The technical system can be technical plant from the process industry or an automation plant, such as a chemical, pharmaceutical or petrochemical plant or a plant from the food and beverage industry. This also includes any plant or technical system from the manufacturing and production industry and plants in which, for example, cars or goods of any kind are produced. Furthermore, the technical system can also be designed as a power generation system, such as a wind turbine, a solar plant or a power plant.

The respective unit, e.g. the first channel service unit or the identity and access management unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of a communication system according to a first embodiment;
- Fig. 2: shows a schematic block diagram of a communication system according to a second embodiment. In the drawing, Fig. 2 is divided into figures 2a and 2b for reasons of clarity. Hereinafter, said two fig-ures 2a and 2b taken in conjunction to depict said schematic block diagram are uniformly referred to as FIG. 2;
- Fig. 3: shows a schematic block diagram of a channel setup for establishing a secure communication channel according to an embodiment;
- Fig. 4: shows a schematic flowchart of an embodiment of a computer-implemented method for data transmission;
- Fig. 5: shows a schematic block diagram of a virtual network from the first communication unit's point of view;
- Fig. 6: shows a schematic block diagram of a virtual network from the second communication unit's point of view; and
- Fig. 7: shows a schematic block diagram of a wireguard implementation of the computer-implemented method according to Fig. 4.

In the Figures, like reference numerals designate like or functionally equivalent elements, unless otherwise indicated.

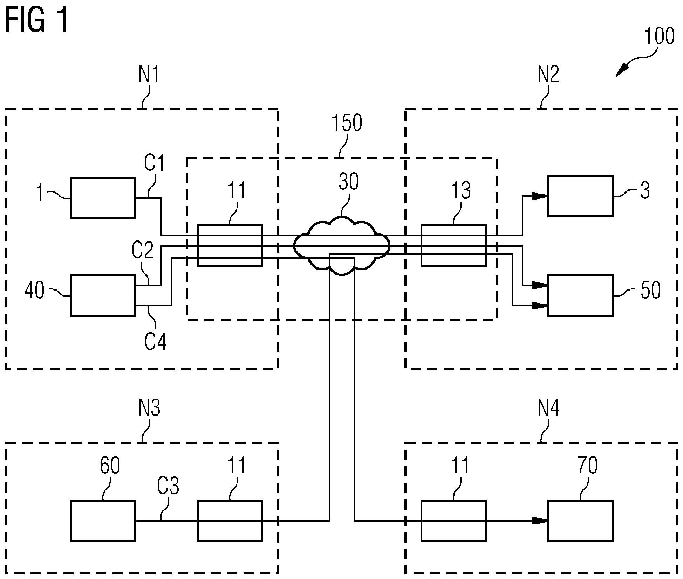

Fig. 1 shows a schematic block diagram of a communication system 100 according to a first embodiment. In Fig. 1, an exemplary scenario for different communication relationships between different units, for example, clients or services, located in different networks, is shown. In Fig. 1, a first communication path C1, a second communication path C2, a third communication path C3 and a fourth communication path C4 respectively show example communication relationships between a client and a service, and each communication relationship corresponds to a communication channel.

The communication system 100 in Fig. 1 includes a first communication unit 1 (see also Figs. 2, 3, 5 and 6), a second communication unit 3 (see also Figs. 2, 3, 5 and 6), a first chancel service unit 11 (see also Figs. 2, 3 and 5), a second channel service unit 13 (see also Figs. 2, 3 and 6), an intermediate network 30 (see also Fig. 2), a further first communication unit 40 (see also Fig. 5) and a further second communication unit 50. Further, the communication system 100 of Fig. 1 includes a first network N1 (see also Figs. 2, 3 and 5) and a second network N2 (see also Figs. 2, 3 and 6). The first communication unit 1, the further first communication unit 40 and the first channel service unit 11 are arranged within the first network N1 (see in Fig. 1 the dashed lines with the reference numeral N1). The second communication unit 3, the further second communication unit 50 and the second channel service unit 13 are arranged within the second network N2 (see in Fig. 1 the dashed lines with the reference numeral N2).

In addition, Fig. 1 shows a third network N3 including a third communication unit 60 (see also Figs. 5 and 6) and also the first channel service unit 11. Further, a fourth network N4 is shown in Fig. 1 which includes a fourth communication unit 70 (see also Figs. 5 and 6) and also the first channel service unit 11.

The first network N1, the third network N3 and the fourth network N4 are private networks with private IP-addresses, respectively. For example, the first communication unit 1 has the private IP-address 10.1.2.5, the further first communication unit 40 has the private IP-address 10.1.2.7, the third communication unit 60 has the private IP-address 192.168.178.2 and the fourth communication unit 70 has the private IP-address 192.168.178.55. The three private IP-addresses are respectively physical source IP-addresses, for example, the private IP-address 10.1.2.5 is the physical source IP-address of the first communication unit 1. Further, the second communication unit 3 is a public network which is public accessible and has the public IP-address 213.14.5.10, wherein this IP-address is a physical destination IP-address IP_DSTPHY (see Fig. 2 below) of the second communication unit 3. The third network N3 and the fourth network N4 use in Fig. 1 the same address space, namely with the private IP-address 192.168.178.X (not shown).

In Fig. 1, the first communication unit 1 is a laptop (a client), the second communication unit 3 is a cloud service (service), the third communication 40 is also a laptop (a client) and the fourth communication unit 70 is a printer (a service) .

Further, Fig. 1 includes a network address translation area 150, in which the network address translation from the units within the first network N1 to the units within the second network N2 over the intermediate network 30 is performed. This is explained later in detail in Fig. 2.

Moreover, the first communication unit 1 and the first channel service unit 11 are implemented within a first network device or the second communication unit 3 and the second channel service unit 13 are implemented within a second network device (not shown).

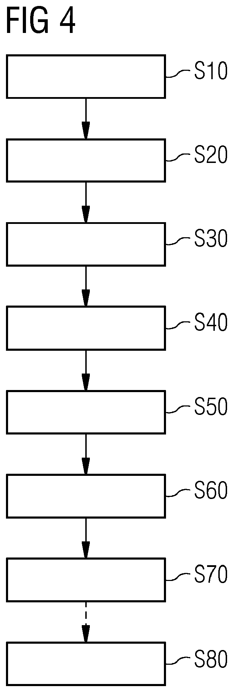

Hereinafter, Fig. 2a and Fig. 2b as depicted in the drawing are uniformly referred to FIG. 2. Fig. 2 shows a schematic block diagram of a communication system 100 according to a second embodiment based on which, the network address translation in the network address translation area 150 (see also Fig. 1) is explained based on the computer-implemented method for data transmission according to Fig. 4. In addition, references to the method steps of Fig. 4, which describes the computer-implemented method for data transmission, are indicated in parentheses in the following explanations of Fig. 2.

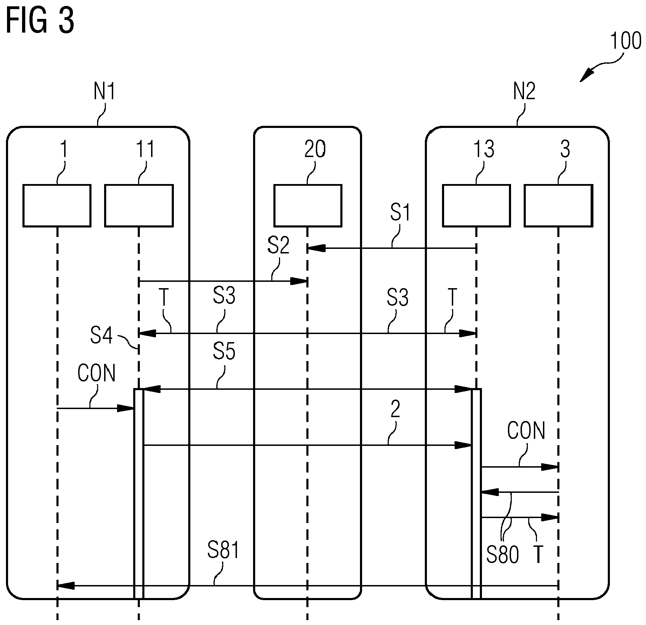

The communication system 100 of Fig. 2 for data transmission between a first channel service unit 11 (see also Figs. 1, 3 and 5) and a second channel service unit 13 (see also Figs. 1, 3 and 6) included in the communication system 100 includes further a channel database 10, a first communication unit 1 (see also Figs. 1, 3, 5 and 6) and a second communication unit 3 (see also Figs. 1, 3, 5 and 6) and an identity and access management unit 20 (see Fig. 3).

Prior to starting the communication between the first communication unit 1 and a second communication unit 3, a channel setup is executed to establish a secure communication channel 2 (see also Fig. 3). This channel setup is explained later in detail in Fig. 3.

During the channel setup as one of the last steps of the channel setup, the second channel service unit 13 is configured to verify a token T (see Fig. 3) and to establish the secure communication channel 2, including an input and an output, between the first channel service unit 11 and the second channel service unit 13 in dependence on a successful verification of the token T. The input channel IP-address IP_IN is assigned to the input and an output channel IP-address IP_OUT is assigned to the output (see also method step S10 of Fig. 4).

Further, in Fig. 2, the first communication unit 1 is arranged within a first network N1 (see also Figs. 1, 3 and 5) and the second communication unit 3 is arranged within a second network N2 (see also Figs. 1, 3 and 6). In Fig. 2, the first network N1 is a private network.

Next, the network address translation in the network address translation area 150 (see also Fig. 1) is described in Fig. 2, wherein the network address translation area 150 includes the first channel service unit 11, the second channel service unit 13, the channel database 10, the intermediate network 30 (see also Fig. 1) and multiple IP-packets.

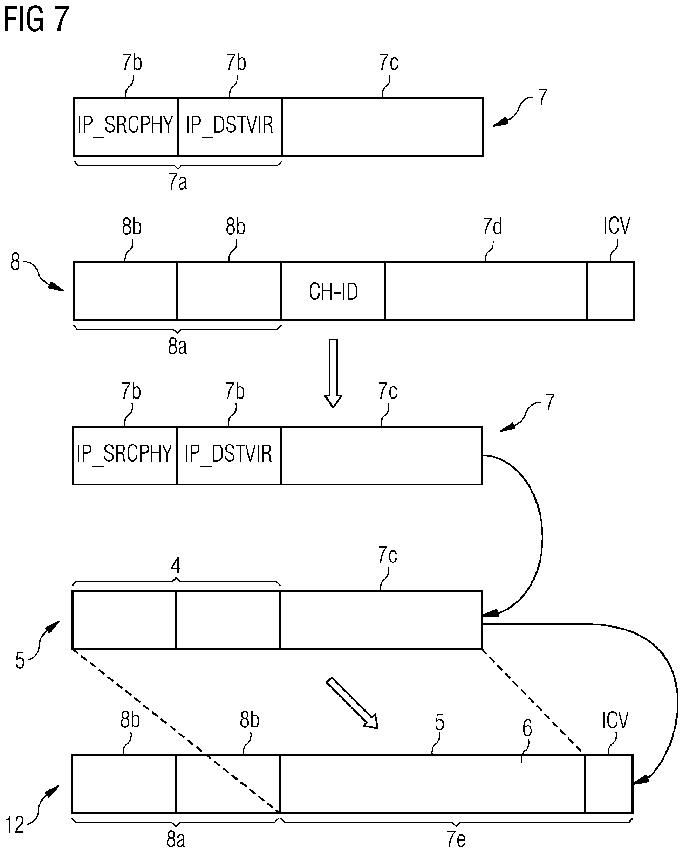

As a first step, the first communication unit 1 included in the private first network N1 and formed as a private laptop is configured to transmit a first IP-packet 7 (see also Fig. 7) to the input channel IP-address IP_IN of the secure communication channel 2. As shown in Fig. 2, the first IP-packet 7 includes a first header 7a (see also Fig. 7) with first header IP-addresses 7b (see also Fig. 7) and a first payload 7c (see also Fig. 7).

The first header IP-addresses 7b include a physical source IP-address IP_SRCPHY and a virtual destination IP-address IP_DSTVIR, wherein the input channel IP-address IP_IN corresponds to the virtual destination IP-address IP_DSTVIR.

In Fig. 2, the first communication unit 1 has the physical source IP-address 10.1.2.5 (see the first table 16a in Fig. 2). The input channel IP-address IP_IN corresponds to the virtual destination IP-address 10.1.1.51 (see the first table 16a in Fig. 2). in other words, the input channel IP-address IP_IN is a virtual channel IP-address.

Then, the first channel service unit 11 is configured to receive from the first communication unit 1, the first IP-packet 7, transmitted to the input channel IP-address IP_IN, wherein the input channel IP-address IP_IN is assigned to the first channel service unit 11 (see also method step S20 of Fig. 4).

Next, the first channel service unit 11 is configured to match the first header IP-addresses 7b to first database IP-addresses 17 included in a first table 16a in the channel database 10 for obtaining a channel-ID CH-ID (see also Fig. 7) associated to the second channel service unit 13 (see also method step S30 of Fig. 4).

Moreover, the first channel service unit 11 is configured to match the physical source IP-address IP_SRCPHY 10.1.2.5 to a first legacy-IP-address (see column "Legacy IP" in the first table 16a of Fig. 2) included in the first database IP-addresses 17 and to match the virtual destination IP-address IP_DSTVIR 10.1.1.51 to a first database channel IP-address (see column "Channel IP" in the first table 16a in Fig. 2) included in the first database IP-addresses 17 for obtaining the channel-ID CH-ID. In embodiments, the physical source IP-address IP_SRCPHY and/or the virtual destination IP-address IP_DSTVIR are matched against TCP-Ports (not shown) in the channel database 10. In addition, the first channel service unit 11 is configured to encrypt the first payload 7c by means of cryptographic entities from the channel database 10 for obtaining the encrypted first payload 7d (see also Fig. 7) .

Afterwards, the first channel service unit 11 is further configured to generate a second IP-packet 8 (see also Fig. 7) addressed to the second channel service unit 13 and including a second header 8a (see also Fig. 7) with second header IP-addresses 8b (see also Fig. 7), the channel-ID CH-ID 34a2:135b (see the first table 16a in Fig. 2) and the encrypted first payload 7d. Further, the second IP-packet 8 includes a data field for an integrity check value ICV (see also Fig. 7).

In Fig. 2, the encryption of the first payload 7c and the integrity check value ICV are executed by the first channel service unit 11 by means of cryptographic material of the channel database 10 (see column "key" in the first table 16a in Fig. 2).

The second header IP-addresses 8b include a physical destination IP-address IP_DSTPHY and a virtual source IP-address IP_SRCVIR, wherein the output channel IP-address IP_OUT corresponds to the virtual source IP-address IP_SRCVIR.

Next, the first channel service unit 11 is further configured to transmit the second IP-packet 8 via the intermediate network 30, for example, the internet, to the second channel service unit 13 (see also method step S40 of Fig. 4).

Then, the second channel service unit 13 is configured to receive from the first channel service unit 11, the second IP-packet 8.

In particular, after the receiving, for technical reasons, the two components of the channel-ID CH-ID 34a2:135b have to be swapped. Thus, the channel-ID CH-ID is in the second table 16b of the channel database 10 shown with channel-ID CH-ID 135b:34a2. The first table 16a and the second table 16b are included in the channel database 10.

Afterwards, the second channel service unit 13 is configured to match the channel-ID CH-ID to a corresponding decryption key Key (see column "key" in the second table 16b in Fig. 2) and to decrypt and to verify the encrypted first payload 7d by means of the decryption key Key included in the channel database 10. If the verifying is positive, the second channel service unit 13 is configured to match the second header IP-addresses 8b to second database IP-addresses 18 assigned to the channel-ID CH-ID included in the second table 16b of the channel database 10 for obtaining a physical destination IP-address IP_DSTPHY (see also method steps S50 and S60 of Fig. 4) .

In addition, the second channel service unit 13 is further configured to match a second legacy-IP-address (see column "Legacy IP" in the second table 16b of Fig. 2) assigned to the channel-ID CH-ID 135b:34a2 included in the second database IP-addresses 18 to the physical destination IP-address IP_DSTPHY and to match a second database channel IP-address (see column "Channel IP" in the second table 16b in Fig. 2) assigned to the channel-ID CH-ID included in the second database IP-addresses 18 to the virtual source IP-address IP_SRCVIR.

Furthermore, the second channel service unit 13 is configured to generate a third IP-packet 9 including the physical destination IP-address IP_DSTPHY and the first payload 7c, and to transmit the third IP-packet 9 to the physical destination IP-address IP_DSTPHY (see also method step S70 of Fig. 4).

In addition, as shown in Fig. 2, the third IP-packet 9 including a third header 9a including third header IP-addresses 9b, wherein the third header IP-addresses 9b including the physical destination IP-address IP_DSTPHY and the virtual source IP-address IP_SRCVIR.

In Fig. 2, the physical destination IP-address IP_DSTPHY is 213.14.5.10 and the virtual source IP-address IP_SRCVIR 10.1.5.10 (see in second table 16b in the columns "Legacy IP" and "Channel IP"). The second communication unit 3 is arranged within the second network N2. The physical destination IP-address IP_DSTPHY 213.14.5.10 is the real IP-address of the second communication unit 3 in the second network N2. The virtual source IP-address IP_SRCVIR 10.1.5.10 is the output channel IP-address of the secure communication channel 2 in the point of view of the second communication unit 3.

Then, the second communication unit 3 is configured to receive the third IP-packet 9 from the output channel IP-address IP_OUT which corresponds to the virtual source IP-address IP_SRCVIR 10.1.5.10. Further, the second network N2 in Fig. 2 is a public network.

Further, the following explanations below serve for a deeper understanding of the method steps S10 to S70 of the computer-implemented method according to Fig. 4.

If the first communication unit 1 wants to communicate with the second communication unit 3 via the secure communication channel 2, then the first communication unit 1 does not specify the actual IP-address 213.14.5.10 of the second communication unit 3 as the destination address, but rather the input channel IP-address IP_IN 10.1.1.51 of the channel, here the secure communication channel 2, it wants to use to reach the second communication unit 3.

From the first communication unit 1's point of view, all second communication units that it can reach via channels are located within a network 10.1.1.0/24 (see Fig. 5). The channel used for communication is selected by the first communication unit 1 via the respective channel IP-address.

In addition, the IP-packets, for example, the third IP-packet 9, which arrive at the second communication unit 3, do no longer have the physical source IP-address IP_SRCPHY 10.1.2.5 of the first communication unit 1, but the (outgoing) output channel IP-address IP_OUT 10.1.5.10 of the secure communication channel 2.

From the second communication unit 3's point of view, all first communication units that it can reach via channels are located within a network 10.1.5.0/24 (see Fig. 6).

Fig. 3 shows a schematic block diagram of a channel setup for establishing a secure communication channel 2 (see also Fig. 2) according to an embodiment. In Fig. 3, the communication system 100 (see also Fig. 2) according to Fig. 1 is shown. In addition, the communication system 100 includes further an identity and access management unit (IAM) 20.

The channel setup is executed within the step S10 (see Fig. 4). The channel setup includes the steps S1 to S5 which are executed prior to the establishing in step S10.

In step S1, second authentication material associated to the second channel service unit 13 (see also Figs. 1, 2 and 6) is transmitted to the IAM 20. Further, S1 includes a step of determining access information for the first communication unit 1, wherein the access information indicates which specific services of a set of predefined services the first communication unit 1 is allowed to have access to.

Further, in step S2 a request for authenticating the first channel service unit 11 (see also Figs. 1, 2 and 5) in dependence on first authentication material and a request for obtaining the token T for establishing the secure communication channel 2 between the first and second channel service units 11, 13 is transmitted to the IAM 20.

Next, in step S3, after successful authentication of the first and second channel service units 11, 13 in dependence on the first and second authentication material, the token T is transmitted to the first and second channel service units 11, 13.

Further, in step S4, the token T is verified by the first channel service unit 11.

Then, in step S5, in dependence on the successful verification of the token T, the secure communication channel 2 is established. The step S5 intersects with the step S10 for establishing the secure communication channel 2 (see method step S10 of Fig. 4).

In Fig. 3, from the first communication unit's 1 point of view, the second communication unit 3 has the IP-address 10.1.1.51 (see Fig. 5). Further, in Fig. 3, the first communication unit 1 sends a request for a TCP-connection CON to the first channel service unit 11 for accessing to one of the predefined services of the second communication unit 3.

Further, from the second communication unit's 3 point of view, the first communication unit 3 has the IP-address 10.1.5.10 (see Fig. 6). Thus, in Fig. 3, the second communication unit 3 receives the request for the TCP-connection CON from the second channel service unit 13.

Next, as also shown in Fig. 3, the computer-implemented method according to Fig. 4 further includes the step S80 (see also Fig. 4):
requesting a transmitting of the token T by the second channel service unit 13 for transmitting the token T from the second channel service unit 13 to the second communication unit 3, and if the request is granted,
transmitting the token T from the second channel service unit 13 to the second communication unit 3, wherein the token T includes authorization information of the first communication unit 1.

In addition, after the step S80, in a step S81, the second communication unit 3 replies to the authorization information and transmits the authorization information back to the first communication unit 1 via the secure communication channel 2.

In Figs. 2 and 3, the first channel service unit 11 is formed as a first proxy and the second channel service unit 13 is formed as a second proxy. Further, in Figs. 2 and 3 the first communication unit 1 is formed as a first legacy device and the second communication unit 3 is formed as a second legacy device.

Fig. 4 shows a schematic flowchart of an embodiment of a computer-implemented method for data transmission between a first channel service unit 11 (see Figs. 1, 2, 3 and 5) and a second channel service unit 13 (see Figs. 1, 2, 3 and 6) both included in a communication system 100 (see Figs. 1, 2 and 3). The respective method steps S10 - S70 of the computer-implemented method have already been explained above in terms of Fig. 2, which is why, in order to avoid repetitions, the method steps S10 - S70 are not explained again. This also applies to the method step S80 in connection with Fig. 3 which is an embodiment of the method steps S10 - S70 of the computer-implemented method and is thus connected to the method steps S10 - S70 of Fig. 4 via respective dashed lines including at one end an arrow.

Hereinafter, the steps S10 to S70 of the computer-implemented method according to Fig. 4 respectively further include (not shown):
First, the step S10 further includes:
   establishing a further secure communication channel, including a further input and a further output, between the first channel service unit 11 and the second channel service unit 13 in dependence on the successful verification of a further token, wherein a further input channel IP-address is assigned to the further input and a further output channel IP-address is assigned to the further output.
Second, the step S20 further includes: receiving a further first IP-packet transmitted to the further input channel IP-address, wherein the further input channel IP-address is assigned to the first channel service unit 11, wherein the further first IP-packet includes a further first header with further first header IP-addresses and a further first payload.
Third, the step S30 further includes: matching the further first header IP-addresses to further first database IP-addresses included in the channel database 10 (see Fig. 2) for obtaining a further channel-ID associated to the second channel service unit 13.
Fourth, the step S40 further includes:
   generating a further second IP-packet addressed to the second channel service unit 13 and including a further second header with further second header IP-addresses, the further channel-ID and a further encrypted first payload, and transmitting the further second IP-packet via the intermediate network 30 (see Figs. 1 and 2) to the second channel service unit 13.
Fifth, the step S50 further includes: matching the further channel-ID to a further corresponding decryption key and decrypting and verifying the further encrypted first payload by means of the further decryption key, and if the verifying is positive, step S60 further includes matching the further second header IP-addresses to further second database IP-addresses assigned to the further channel-ID included in the channel database 10 for obtaining a further physical destination IP-address.
Sixth, the step S70 further includes:
   generating a further third IP-packet including the further physical destination IP-address and the further first payload, and transmitting the further third IP-packet to the further physical destination IP-address.

Fig. 5 shows a schematic block diagram of a virtual network from the first communication unit's 1 (see also Figs. 1, 2, 3 and 6) point of view. The first communication unit 1 is in Fig. 5 a client device and is arranged in the first network N1 (see also Figs. 1, 2 and 3). It has the physical source IP-address 10.1.2.5. The virtual network within the dashed lines in Fig. 5 is the virtual network, the first communication unit 1 sees.

Furthermore, in the first network N1 in Fig. 5, the further first communication unit 40 (see also Fig. 1) is included. Further, within the virtual network of Fig. 5, the third communication unit 60 (see also Figs. 1 and 6), the first channel service unit 11 (see also Figs. 1, 2 and 3) and the fourth communication unit 70 (see also Figs. 1 and 6) are arranged. Moreover, the first communication unit 1 transmits its data to the input channel IP-address IP_IN (see also Fig. 2), wherein the input channel IP-address IP_IN is assigned to the first channel service unit 11. In Fig. 5, the first channel service unit 11 has the IP-address 10.1.1.0/24. Within this IP-address 10.1.1.0/24, the virtual network and its units are formed.

In addition, multiple switches SW1, SW2, SW3 (see also Fig. 6) are arranged in communication paths between the respective communication units, e.g., in a communication path between the first communication unit 1 and the second communication unit 3 (first switch SW1), between the first communication unit 1 and the fourth communication unit 70 (third switch SW3) and between the first communication unit 1 and the third communication unit 60 (second switch SW2). The first switch SW1 is closed, the second switch SW2 is open and the third switch SW3 is also closed. The closed and open switches SW1, SW2, SW3 in Fig. 5 symbolize connections that have been allowed (closed) or not allowed (open) by the identity and access management unit 20 (see Fig. 3). Thus, this has the advantage that communication units, at which the first communication unit 1 is not allowed to reach, do simply have open switches. For example, in Fig. 5, the first communication unit 1 is not allowed to transmit data to or from the third communication unit 60 since the second switch SW2 to the third communication unit 60 is open. This improves the security of the communication system 100 (see Figs. 1, 2 and 3).

Thus, preferably, the identity and access management unit 20 determines which of the multiple switches are closed and which are open. This means the IAM can provide information, in dependence on the multiple switches and the access information, about which of the communication units, for example, the first communication unit 1 (client), is allowed to communicate with which of the second communication units 3 (services). Hence, the IAM can decide in dependence on the state of the respective switch of the multiple switches and the access information, which of the second communication units 3 the first communication unit is allowed to "see".

Therefore, as shown in Fig. 5, from the first communication unit's 1 view, all services or communication units that it can reach or "see" via channels are located within the 10.1.1.0/24 network. The channel used for communication is selected by the first communication unit 1 via the respective input channel IP-address IP_IN or in the case of multiple secure communication channels 2, a respective further input channel IP-address.

In detail, from the first communication unit's 1 point of view, the first IP-packet 7 (see Fig. 2) which should be transmitted to the second communication unit 3, has no longer the physical destination IP-address of the second communication unit 3 (213.14.5.10, see Fig. 2, reference sign 18), but the (ingoing) input channel IP-address 10.1.1.51 of the secure communication channel 2 (see Figs. 2 and 3). Thus, in Fig. 5, from the first communication unit's 1 point of view, if the first communication unit 1 wants to transmit an IP-packet to the second communication unit 3, it transmits the IP-packet to the input channel IP-address IP_IN 10.1.1.51. In addition, from the first communication unit's 1 point of view, if the first communication unit 1 wants to transmit an IP-packet to the fourth communication unit 70, wherein the first communication unit 1 is allowed to since the second switch SW2 is closed, it transmits the IP-packet to the input channel IP-address IP_IN 10.1.1.70. Thus, in dependence on the desired communication unit partner, the first communication unit 1 chooses different input channel IP-addresses IP_IN corresponding to different secure communication channels.

Fig. 6 shows a schematic block diagram of a virtual network from the second communication unit's 3 (see also Figs. 1, 2, 3 and 5) point of view. The second communication 3 is in Fig. 6 a cloud service and is arranged in the second network N2 (see also Figs. 1, 2 and 3). It has the IP-address 10.0.5.10.

The first communication unit 1 (see also Figs. 1, 2, 3 and 5) is in Fig. 6 a client device and is arranged in the virtual network with the network IP-address 10.1.5.0/24. The first communication unit 1 has in Fig. 6 the virtual source IP-address 10.1.5.10. The virtual network within the dashed lines in Fig. 6 is the virtual network, the second communication unit 3 sees.

Furthermore, in the virtual network 10.1.5.0/24 in Fig. 6, the second channel service unit 13 (see also Figs. 1, 2 and 3), the third communication unit 60 (see also Figs. 1 and 5) and the fourth communication unit 70 (see also Figs. 1 and 5) are included. Moreover, the second communication unit 3 receives its data from the output channel IP-address IP_OUT (see Fig. 2), wherein the output channel IP-address IP_OUT is assigned to the virtual source IP-address IP_SRCVIR (see Fig. 2). In Fig. 6, the second channel service unit 13 has the IP-address 10.1.5.0/24. Within this IP-address 10.1.5.0/24, the virtual network and its units are formed.

In addition, in Fig. 6, also the multiple switches SW1, SW2, SW3 according to Fig. 5 are formed. In Fig. 6, the first switch SW1 is closed, the second switch SW2 is also closed and the third switch SW3 is open. For example, in Fig. 6, the second channel service unit 13, in particular the second communication unit 3, cannot receive data to or from the fourth communication unit 70 since the third switch SW3 to the fourth communication unit 70 is open. This improves the security of the communication system 100 (see Fig. 1, 2 and 3).

Therefore, as shown in Fig. 6, from the second communication unit's 3 view, all clients or communication units that it can reach or that it can receive data from via channels are located within the 10.1.5.0/24 network. The channel used for communication and for receiving data is selected by the second communication unit 3 via the respective output channel IP-address IP_OUT or in the case of multiple secure communication channels 2, a respective further output channel IP-address.

In detail, from the second communication unit's 3 point of view, the third IP-packet 9 (see Fig. 2) which should be received from the second communication unit 3, has the (outgoing) output channel IP-address 10.1.5.10 of the secure communication channel 2 (see Figs. 2 and 3). This output channel IP-address 10.1.5.10 corresponds to the virtual source address IP_SRCVIR (see Fig. 2). Thus, in Fig. 6, from the second communication unit's 3 point of view, if the second communication unit 3 wants to receive an IP-packet from the first communication unit 1, it receives the IP-packet from the output channel IP-address IP_OUT 10.1.5.10. In addition, from the second communication unit's 3 point of view, if the second communication unit 3 wants to receive an IP-packet from the third communication unit 60, wherein the second communication unit 3 is allowed to since the second switch SW2 is closed, it receives the IP-packet from the output channel IP-address IP_OUT 10.1.5.60.

Fig. 7 shows a schematic block diagram of a Wireguard implementation of the computer-implemented method according to Fig. 4. In Fig. 7, step S40 according to Fig. 4 further includes the steps:
encoding the channel-ID CH-ID (see also Fig. 2) into first header IP-addresses 7b (see also Fig. 2) for obtaining an encoded channel-ID 4,
generating, by the first channel service unit 11 (see Figs. 1, 2, 3 and 5), a fourth IP-packet 5 including the encoded channel-ID 4 and the first payload 7c (see also Fig. 2),
encrypting the fourth IP-packet 5 by means of further cryptographic entities for obtaining an encrypted fourth IP-packet 6, and
generating, by the first channel service unit 11, a fifth IP-packet 12 including as a header the second header IP-addresses 8b (see also Fig. 2) and a specific payload 7e including the obtained encrypted fourth IP-packet 6, and transmitting the fifth IP-packet 12 via the intermediate network 30 (see also Figs. 1 and 2) to the second channel service unit 13 (see Figs. 1, 2, 3 and 6).

Further, the specific payload 7e also includes an integrity and check value ICV (see also Fig. 2).

Although the present invention has been described in accordance with preferred embodiments, it is obvious for the person skilled in the art that modifications are possible in all embodiments.

## Claims

1. Computer-implemented method for data transmission between a first channel service unit (11) and a second channel service unit (13) both included in a communication system (100) which includes a channel database (10), the method comprising:
a) establishing (S10f) a secure communication channel (2), including an input and an output, between the first channel service unit (11) and the second channel service unit (13) in dependence on a successful verification of a token (T), wherein an input channel IP-address (IP_IN) is assigned to the input and an output channel IP-address (IP_OUT) is assigned to the output,
b) receiving (S20), by the first channel service unit (11), a first IP-packet (7) transmitted to the input channel IP-address (IP_IN), wherein the input channel IP-address (IP_IN) is assigned to the first channel service unit (11), wherein the first IP-packet (7) includes a first header (7a) with first header IP-addresses (7b) and a first payload (7c),
c) matching (S30), by the first channel service unit (11), the first header IP-addresses (7b) to first database IP-addresses (17) included in the channel database (10) for obtaining a channel-ID (CH-ID) associated to the second channel service unit (13),
d) generating (S40), by the first channel service unit (11), a second IP-packet (8) addressed to the second channel service unit (13) and including a second header (8a) with second header IP-addresses (8b), the channel-ID (CH-ID) and an encrypted first payload (7d), and transmitting the second IP-packet (8) via an intermediate network (30) to the second channel service unit (13),
e) matching (S50), by the second channel service unit (13), the channel-ID (CH-ID) to a corresponding decryption key (Key) and decrypting and verifying the encrypted first payload (7d) by means of the decryption key (Key), and if the verifying is positive,
f) matching (S60), by the second channel service unit (13), the second header IP-addresses (8b) to second database IP-addresses (18) assigned to the channel-ID (CH-ID) included in the channel database (10) for obtaining a physical destination IP-address (IP_DSTPHY), and
g) generating (S70), by the second channel service unit (13), a third IP-packet (9) including the physical destination IP-address (IP_DSTPHY) and the first payload (7c), and transmitting the third IP-packet (9) to the physical destination IP-address (IP_DSTPHY).

2. The method according to claim 1,
**characterized in**
**that** the first header IP-addresses (7b) include a physical source IP-address (IP_SRCPHY) and a virtual destination IP-address (IP_DSTVIR), wherein the input channel IP-address (IP_IN) corresponds to the virtual destination IP-address (IP_DSTVIR) .

3. The method according to claim 2,
**characterized in**
**that** step c) (S30) further includes:
matching the physical source IP-address (IP_SRCPHY) to a first legacy-IP-address included in the first database IP-addresses (17) and matching the virtual destination IP-address (IP_DSTVIR) to a first database channel IP-address included in the first database IP-addresses (17) for obtaining the channel-ID (CH-ID), and
encrypting the first payload (7c) by means of cryptographic entities from the channel database (10) for obtaining the encrypted first payload (7d).

4. The method according to one of claims 1 - 3, **characterized in**
**that** the second header IP-addresses (8b) include the physical destination IP-address (IP_DSTPHY) and a virtual source IP-address (IP_SRCVIR), wherein the output channel IP-address (IP_OUT) corresponds to the virtual source IP-address (IP_SRCVIR).

5. The method according to claim 4,
**characterized in**
**that** step f) (S60) further includes: matching a second legacy-IP-address assigned to the channel-ID (CH-ID) included in the second database IP-addresses (18) to the physical destination IP-address (IP_DSTPHY) and matching a second database channel IP-address assigned to the channel-ID (CH-ID) included in the second database IP-addresses (18) to the virtual source IP-address (IP_SRCVIR).

6. The method according to one of claims 1 - 5, **characterized in**
**that** the communication system (100) further includes a first communication unit (1), wherein step b) (S20) includes, prior to the receiving, the step: transmitting, by the first communication unit (1), the first IP-packet (7) to the input channel IP-address (IP_IN).

7. The method according to one of claims 1 - 6, **characterized in**
**that** the communication system (100) further includes a second communication unit (3), wherein step g) (S70) further includes the step:
receiving, by the second communication unit (3), the third IP-packet (9) from the output channel IP-address (IP_OUT).

8. The method according to claims 6 and 7,
**characterized by**:
h) requesting (S80) a transmitting of the token (T) by the second channel service unit (13) for transmitting the token (T) from the second channel service unit (13) to the second communication unit (3), and if the request is granted,
transmitting the token (T) from the second channel service unit (13) to the second communication unit (3), wherein the token (T) includes authorization information of the first communication unit (1).

9. The method according to claim 8,
**characterized in**
**that** the communication system (100) includes a first network (N1) and a second network (N2), wherein the first communication unit (1) and the first channel service unit (11) are arranged within the first network (N1) and the second communication unit (3) and the second channel service unit (13) are arranged within the second network (N2).

10. The method according to claim 9,
**characterized in**
**that** the first channel service unit (11) is formed as a first proxy and the second channel service unit (13) is formed as a second proxy.

11. The method according to claim 10,
**characterized in**
**that** the first communication unit (1) is formed as a first legacy device and the second communication unit (3) is formed as a second legacy device.

12. The method according to claim 9,
**characterized in**
**that** the first communication unit (1) and the first channel service unit (11) are implemented within a first network device and/or the second communication unit (3) and the second channel service unit (13) are implemented within a second network device.

13. The method according to one of claims 1 - 12,
**characterized in**
**that** step a) (S10) further includes:
establishing a further secure communication channel, including a further input and a further output, between the first channel service unit (11) and the second channel service unit (13) in dependence on the successful verification of a further token, wherein a further input channel IP-address is assigned to the further input and a further output channel IP-address is assigned to the further output,
wherein the step b) (S20) further includes:
receiving a further first IP-packet transmitted to the further input channel IP-address, wherein the further input channel IP-address is assigned to the first channel service unit (11), wherein the further first IP-packet includes a further first header with further first header IP-addresses and a further first payload,
wherein the step c) (S30) further includes:
matching the further first header IP-addresses to further first database IP-addresses included in the channel database (10) for obtaining a further channel-ID associated to the second channel service unit (13),
wherein the step d) (S40) further includes:
generating a further second IP-packet addressed to the second channel service unit (13) and including a further second header with further second header IP-addresses, the further channel-ID and a further encrypted first payload, and transmitting the further second IP-packet via the intermediate network (30) to the second channel service unit (13),
wherein the step e) (S50) further includes:
matching the further channel-ID to a further corresponding decryption key and decrypting and verifying the further encrypted first payload by means of the further decryption key, and if the verifying is positive, step f) (S60) further includes:
matching the further second header IP-addresses to further second database IP-addresses assigned to the further channel-ID included in the channel database (10) for obtaining a further physical destination IP-address, and
wherein the step g) (S70) further includes:
generating a further third IP-packet including the further physical destination IP-address and the further first payload, and transmitting the further third IP-packet to the further physical destination IP-address.

14. The method according to one of claims 1 - 13, **characterized in**
**that** the communication system (100) further includes an identity and access management unit (20), wherein step a) (S10) includes, prior to the establishing, the steps:
transmitting second authentication material associated to the second channel service unit (13) to the identity and access management unit (20),
transmitting a request for authenticating the first channel service unit (11) in dependence on first authentication material and a request for obtaining the token (T) for establishing the secure communication channel (2) between the first and second channel service units (11, 13) to the identity and access management unit (20),
transmitting, after successful authentication of the first and second channel service units (11, 13) in dependence on the first and second authentication material, the token (T) to the first and second channel service units (11, 13),
and
verifying the token (T) by the second channel service unit (3).

15. The method according to claim 14,
**characterized in**
**that** step a) (S10) further includes, prior to the establishing, the step: determining access information for the first communication unit (1), wherein the access information indicates which specific services of a set of predefined services the first communication unit (1) is allowed to have access to.

16. The method according to one of claims 1 - 15, **characterized in**
**that** step d) (S40) further includes:
encoding the channel-ID (CH-ID) into the first header IP-addresses (7b) for obtaining an encoded channel-ID (4),
generating, by the first channel service unit (11), a fourth IP-packet (5) including the encoded channel-ID (4) and the first payload (7c),
encrypting the fourth IP-packet (5) by means of further cryptographic entities for obtaining an encrypted fourth IP-packet (6), and
generating, by the first channel service unit (11), a fifth IP-packet (12) including as a header the second header IP-addresses (8b) and a specific payload (7e) including the obtained encrypted fourth IP-packet (6), and transmitting the fifth IP-packet (12) via the intermediate network (30) to the second channel service unit (13).

17. A computer program product comprising a program code for executing the computer-implemented method according to one of claims 1 - 16 when run on at least one computer.

18. Communication system (100) for data transmission between a first channel service unit (11) and a second channel service unit (13) included in the communication system (100), the communication system (100) comprising:
a channel database (10),
an identity and access management unit (20),
a first communication unit (1) and a second communication unit (3), wherein the second channel service unit (13) is configured to, prior to the establishing:
transmit second authentication material associated to the second channel service unit (13) to the identity and access management unit (20), wherein the first channel service unit (11) is configured to:
transmit a request for authenticating the first channel service unit (11) in dependence on first authentication material and transmit a request for obtaining a token (T) for establishing a secure communication channel (2) between the first and second channel service units (11, 13) to the identity and access management unit (20), wherein the identity and access management unit (20) is configured to:
transmit, after successful authentication of the first and second channel service units (11, 13) in dependence on the first and second authentication material, the token (T) to the first and second channel service units (11, 13),
wherein the second channel service unit (13) is configured to:
verify the token (T) and to establish the secure communication channel (2), including an input and an output, between the first channel service unit (11) and the second channel service unit (13) in dependence on a successful verification of the token (T), wherein an input channel IP-address (IP_IN) is assigned to the input and an output channel IP-address (IP_OUT) is assigned to the output, wherein the first channel service unit (11) is configured to:
receive, from the first communication unit (1), a first IP-packet (7), transmitted to the input channel IP-address (IP_IN), wherein the input channel IP-address (IP_IN) is assigned to the first channel service unit (11), wherein the first IP-packet (7) includes a first header (7a) with first header IP-addresses (7b) and a first payload (7c),
match the first header IP-addresses (7b) to first database IP-addresses (17) included in the channel database (10) for obtaining a channel-ID (CH-ID) associated to the second channel service unit (13),
generate a second IP-packet (8) addressed to the second channel service unit (13) and including a second header (8a) with second header IP-addresses (8b), the channel-ID (CH-ID) and an encrypted first payload (7d), and to transmit the second IP-packet (8) via an intermediate network (30) to the second channel service unit (13), wherein the second channel service unit (13) is configured to:
match the channel-ID (CH-ID) to a corresponding decryption key (Key) and decrypting and verifying the encrypted first payload (7d) by means of the decryption key (Key), and if the verifying is positive,
match the second header IP-addresses (8b) to second database IP-addresses (18) assigned to the channel-ID (CH-ID) included in the channel database (10) for obtaining a physical destination IP-address (IP_DSTPHY), and
generate a third IP-packet (9) including the physical destination IP-address (IP_DSTPHY) and the first payload (7c), and to transmit the third IP-packet (9) to the physical destination IP-address (IP_DSTPHY) .

19. Communication system (100) according to claim 18, **characterized in**
**that** the first channel service unit (11) is formed as a first proxy and the second channel service unit (13) is formed as a second proxy, and wherein the first communication unit (1) is formed as a first legacy device and the second communication unit (3) is formed as a second legacy device.
